# EUROPÄISCHE PATENTANMELDUNG

(11) **EP 1 317 120 A2**
(43) Veröffentlichungstag der Anmeldung: **04.06.2003**
(21) Anmeldenummer: 02024603.9
(22) Anmeldetag: 04.11.2002
(51) Int. Cl.: H04M 3/42

(54) **Übermittlung Call-bezogener Daten in einem CTI-Kommunikationssystem**

(30) Priorität: 30.11.2001 DE 10158748
(71) Anmelder: SIEMENS AKTIENGESELLSCHAFT, 80333 München (DE)
(72) Erfinder: Marschall, Andreas, 45130 Essen (DE); Schroeter, Otto, 45307 Essen (DE)

(57) **Zusammenfassung**

Die Erfindung betrifft insbesondere ein Verfahren zur Übermittlung von Daten in einem CTI-Kommunikationssystem in 3^{rd}-party-Konfiguration, umfassend ein Kommunikationssystem (1) mit mehreren Endgeräten (2a-2c), das für eine Kommunikationsverbindung zwischen zwei oder mehr Endgeräten (2a-2c) einen Call (5) generiert, der vorgegebene Informationen über die Verbindung umfasst, einen TSP (4) und mehrere mit dem TSP (4) verbundene Clients (3a-3c), die über eine CTI-Schnittstelle (7) mit dem TSP (4) kommunizieren. Zur Übermittlung von Dateien oder Logging-Daten (10) zwischen den Clients (3a-3c) wird vorgeschlagen, die zu übermittelnden Daten von einem der Clients (3a-3c) über die CTI-Schnittstelle (7) zum TSP (4) zu übertragen und in einen vorgegebenen Speicherbereich des Calls (5) zu schreiben. Diese Daten können von den anderen, dem Call (5) zugeordneten Clients (3a-3c) ebenfalls über die CTI-Schnittstelle (7) ausgelesen werden.

## Beschreibung

Die Erfindung betrifft insbesondere ein Verfahren zur Übermittlung von Daten in einem CTI-Kommunikationssystem in 3^{rd}-party-Konfiguration.

CTI-Kommunikationssysteme (CTI: Computer Telephony Integration) ermöglichen einen Datenaustausch zwischen einer Telekommunikations-Hardware, wie beispielsweise einem Telephonsystem, und einem Rechner bzw. einer rechnergeschützten Software-Applikation. Bezüglich der Anordnung von Telekommunikationssystem und Rechnersystem wird im wesentlichen zwischen zwei Konfigurationen, der sog. 1^{st}party-Konfiguration und 3^{rd}-party-Konfiguration unterschieden.

In 1^{st}-party-Konfiguration ist ein Telefon jeweils direkt mit einem Computer verbunden. Dagegen kommunizieren in einem CTI-Kommunikationssystem in 3^{rd}-party-Konfiguration ein Netz von Telekommunikationsgeräten mit einem Computernetz über einen Server.

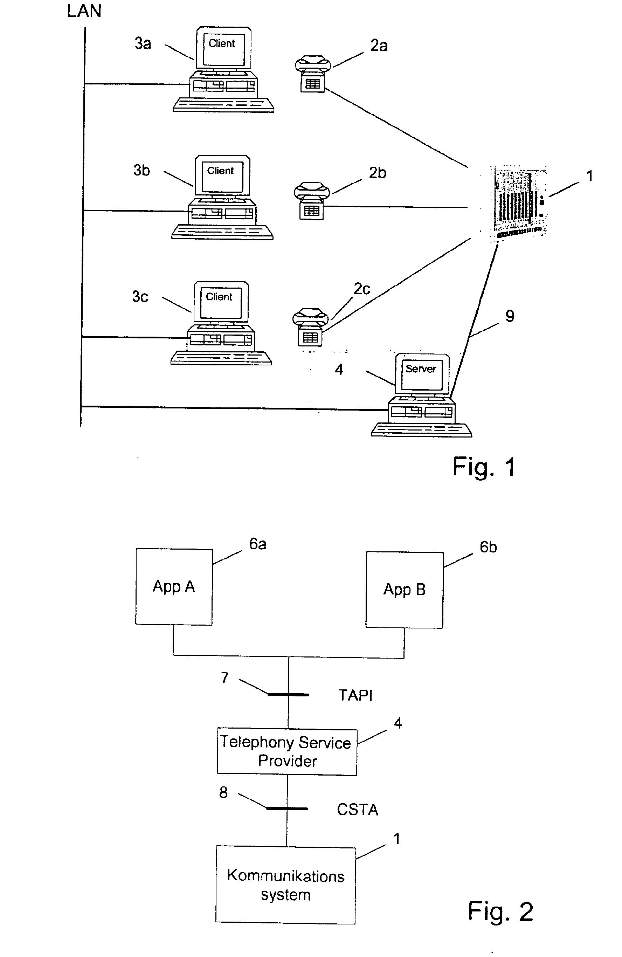

Ein typisches Beispiel eines CTI-Kommunikationssystems in 3^{rd}-party-Konfiguration ist in Figur 1 dargestellt.

Figur 1 zeigt ein Kommunikationssystem 1 mit mehreren daran angeschlossenen Endgeräten 2a-2c. Bei letzteren kann es sich, wie dargestellt, um Telephone oder um eine beliebige andere Art von Datenübertragungsgeräten handeln, die über eine Amtsleitung mit dem Kommunikationssystem 1 verbunden sind, wie beispielsweise Faxgeräte.

Das Kommunikationssystem 1 ist über eine Datenleitung 9 mit einem Server 4 verbunden, der als TSP (Telephony Service Provider) dient und an dem wiederum mehrere Client-Rechner 3a-3c über ein LAN (Local Area Network) angeschlossen sind.

Figur 2 zeigt die Zusammenschaltung des CTI-Kommunikationssystems nochmals als Blockschaltbild, wobei die Schnittstellen zwischen den einzelnen Blöcken dargestellt sind.

Wie zu erkennen ist, kommuniziert der TSP 4 mit dem Kommunikationssystem über eine sogenannte CSTA-Schnittstelle 8 (CSTA: Computer Supported Telephony Application Interface), die das Meldeprotokoll zwischen Server 4 und Telekommunikationsnetz 1 definiert. Die Clients 3a-3c bzw. die darauf laufenden Software-Applikationen 6a,6b für die Verwaltung telekommunikationsbezogener Daten, die auch als CTI- bzw. TAPI-Applikationen bezeichnet werden (TAPI: Telephony Application Programming Interface), kommunizieren dagegen über eine CTI-Schnittstelle 7 mit dem TSP 4. Die CTI-Schnittstelle ist im vorliegenden Beispiel als TAPI-Schnittstelle realisiert.

Mit diesem System kann ein Nutzer eines der Clients 3a-3c bestimmte vorgegebene Informationen über eine im Kommunikationssystem 1 geschaltete Verbindung erhalten. Dies können beispielsweise die Dauer eines zwischen zwei Endgeräten 2a,2b geführten Telephongesprächs, die Teilnehmer des Gespräches, Gebühren, etc. sein, die dem Nutzer z.B. in der auf seinem Client 3a-3c laufenden Software-Applikation angezeigt werden.

Sämtliche Informationen und Kenndaten einer Kommunikationsverbindung sind in einem sogenannten Call zusammengefasst. Dabei handelt es sich um eine abstrakte Einheit, die als Datenpaket aufgefasst werden kann und die vorgegebenen Inhalte, wie beispielsweise eine Identifikationsnummer, die an der Verbindung beteiligten Endgeräte 2a-2c, und weitere die Verbindung betreffende Informationen aufweist.

Calls werden immer dann vom Kommunikationssystem 1 generiert, wenn eine Verbindung (Ruf oder Gespräch) zwischen wenigstens zwei Endgeräten 2a-2c zustande gekommen ist.

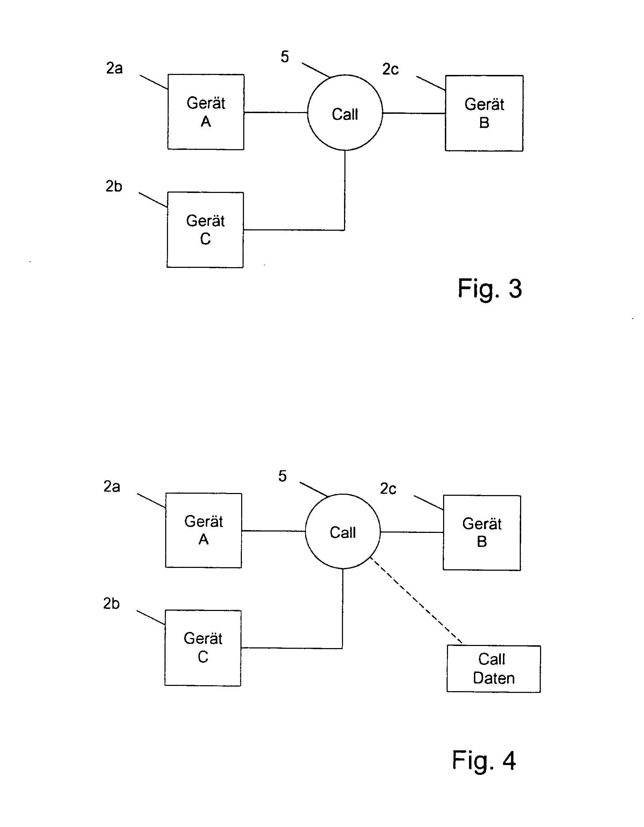

Ein Call-Modell, das in CTI-Kommunikationssystemen verwendet wird, ist in Figur 3 zur Veranschaulichung dargestellt. Danach ist zwischen den Endgeräten 2a-2c ein Call 5 gezeigt, in dem die Verbindung betreffende Daten gespeichert sind.

Dieser Call 5 wird über eine Datenleitung 9 an den Server 4 übertragen und von dort an vorgegebene Clients 3a-3c weiter verteilt. Die im Call enthaltene Information steht somit an allen, dem Call zugeordneten Clients 3a-3c zur Verfügung.

Üblicherweise ist einem Endgerät 2a-2c nur jeweils ein Client 3a-3c zugeordnet, so dass der Call nur an diejenigen Clients 3a-3c weitergeleitet wird, die dem Call bzw. den im Call verzeichneten Endgeräten 2a-2c zugeordnet sind.

Dem Nutzer des Clients 3a ist es somit beispielsweise möglich, Informationen über ein Gespräch am zugeordneten Telefon 2a abzurufen, nicht jedoch am Telefon 2c.

Zustandsänderungen in einer Kommunikationsverbindung, z.B. durch Beenden eines Gespräches oder Hinzukommen eines weiteren Teilnehmers (Konferenzschaltung), werden vom Kommunikationssystem 1 ständig überwacht und ein entsprechend modifizierter Call an den Server 4 weitergeleitet. Bei Beendigung einer Verbindung eines Endgerätes 2a-2c wird der entsprechende Eintrag des Endgerätes (z.B. 2a) im Call gelöscht, so dass der Call nur noch den anderen Clients zugeordnet ist. Bei Beendigung eines Gespräches zwischen nur zwei Teilnehmern wird der zugehörige Call ganz gelöscht.

Die Datenübertragung bei diesem bekannten CTI-Kommunikationssystem ist bisher auf die Übermittlung von Informationsdaten beschränkt, die eine aktuelle Verbindung betreffen. Eine Übertragung von Dateien zwischen einzelnen Clients 3a-3c ist bislang nicht möglich. Ferner ist es nicht möglich, Informationen über diejenigen Endgeräte 2a-2c zu erhalten, die in der Vergangenheit an einem Call beteiligt waren und eine Art Rufverfolgung durchzuführen.

Es ist daher die Aufgabe der vorliegenden Erfindung, in einem Kommunikationssystem den Austausch von Daten zwischen den Clients ermöglichen.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Der wesentliche Gedanke der Erfindung besteht darin, entweder ganze Dateien oder Daten für eine Rufverfolgung (Logging-Daten) von einem Client über die CTI-Schnittstelle an einen TSP zu übertragen und in einem vorgegebenen Speicherbereich eines zugeordneten Calls zu speichern. Diese Dateien bzw. Daten können dann von einem anderen, dem Call zugeordneten Client ebenfalls über die CTI-Schnittstelle ausgelesen werden.

Unter Logging-Daten sind dabei Daten zu verstehen, die angeben, welche Teilnehmer in der Vergangenheit an einer bestehenden Verbindung beteiligt waren.

Das Übertragen der Dateien bzw. Logging-Daten zwischen Client und Server erfolgt somit in einfacher Weise über die bereits bestehende CTI-Schnittstelle, so dass keine andere Schnittstelle geöffnet werden muß.

Zum Speichern der Dateien bzw. Logging-Daten im zugeordneten Call ist es, wie erwähnt, erforderlich, dass der Call einen zusätzlichen Speicherbereich aufweist, in den die einzufügenden Daten geschrieben werden können. Dieser zusätzliche Speicherbereich kann eine Größe von mehreren KB, z.B. 64KB aufweisen.

Gemäß einer bevorzugten Ausführungsform der Erfindung umfassen die Logging-Daten z.B. die Dauer eines Gesprächs, die Teilnehmer des Gespräches oder die Art der Verbindung (Ruf, Gespräch oder Rufweiterleitung etc.).

Dadurch können in einem Call Informationen zu sämtlichen Endgeräten protokolliert werden, die diesem Call während seiner gesamten Lebensdauer zugeordnet waren. Zu diesem Zweck schreibt jeder Client bzw. jede CTI-Software-Applikation vorgegebene Daten betreffend das ihr zugeordnete Endgerät in den zugehörigen Call. Dies erfolgt vorzugsweise zu Beginn und am Ende einer Verbindung (z.B. bei einem Anruf oder nach dem Auflegen), so dass wenigstens Anfang und Ende einer Verbindung registriert sind.

Bei einer Rufumleitung oder Weiterverbindung von einem Endgerät zu einem anderen trägt vorzugsweise jeder der zugeordneten Clients Daten, insbesondere den Teilnehmer bzw. Nutzer des zugeordneten Endgeräts, in den zugehörigen Call ein, so dass letztlich eine Art Verbindungshistorie erzeugt wird. Da diese Informationen bei sämtlichen dem Call zugeordneten Clients verfügbar sind, steht somit allen (auch neu hinzukommenden) zugeordneten Clients die Verbindungshistorie dieses Calls zur Verfügung. Ein zu einem bestehenden Call neu hinzugekommener Teilnehmer erhält somit die bisher geschalteten Verbindungen auf seinem Client-Rechner angezeigt.

Die Verbindungshistorie umfaßt wenigstens den Namen der Nutzer von Endgeräten, denen der Call bisher zugeordnet war.

Weiterhin kann die Verbindungshistorie Daten zur Dauer der Verbindung, zur Art der Verbindung, Datum, Uhrzeit, etc. enthalten.

Die Erfindung wird nachstehend anhand der beigefügten Zeichnungen beispielhaft näher erläutert.

Dabei zeigen:
- Fig. 1:: ein bekanntes CTI-Kommunikationssystem in 3^{rd}-party-Konfiguration;
- Fig. 2:: ein Blockschaltbild des CTI-Kommunikationssystems von Figur 1, in dem die Kommunikationsschnittstellen dargestellt sind;
- Fig. 3:: ein Beispiel eines Call-Modells für ein CTI-Kommunikationssystem;
- Fig. 4:: eine schematische Darstellung zur Erläuterung des grundsätzlichen Prinzips der Erfindung; und

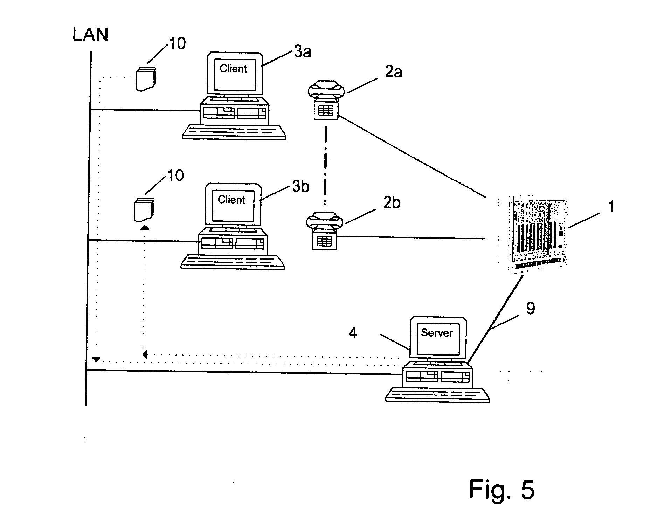

- Fig. 5:: die Übertragung von Dateien in einem CTI-Kommunikationssystem gemäß einem Ausführungsbeispiel der Erfindung.

Bezüglich der Erläuterung der Figuren 1 bis 3 wird auf die Beschreibungseinleitung verwiesen.

Figur 4 zeigt ein Call-Modell für CTI-Kommunikationssysteme, bei dem mehrere Endgeräte 2a-2c, wie beispielsweise Telefone, miteinander in Verbindung stehen. Die Verbindungs-Eckdaten sind in einem Call 5 registriert, der beispielsweise Informationen darüber enthält, welche Teilnehmer am Gespräch beteiligt sind, wie lange das Gespräch an den einzelnen Endgeräten 2a-2c bereits dauert oder welche Rufnummer die Teilnehmer besitzen.

Der Call 5 ist beispielsweise auf dem Server 4 zwischengespeichert und wird ständig vom Kommunikationssystem 1 aktualisiert. Der Call 5 kann außerdem von allen ihm zugeordneten Clients 3a-3c gelesen und die im Call enthaltenen Informationen am Bildschirm der Clients 3a-3c dargestellt werden.

Der Datensatz (Call) 5 hat einen vorgegeben Speicherbereich, in den beliebige Daten, wie z.B. Dateien oder andere Informationen gespeichert werden können. Somit ist es möglich, Daten von einem Client 3a-3c über die CTI-Schnittstelle (TAPI) 7 direkt in den Call 5 bzw. in einen dem Call 5 zugewiesenen Speicher zu schreiben und die Daten von einem anderen der Clients 3a-3c auszulesen und darzustellen. Dadurch ist es in einfacher Weise möglich, Dateien oder Logging-Daten direkt einem Gesprächspartner zur Verfügung zu stellen.

Besonders anwenderfreundlich wird dies, wenn das Senden einer Datei mittels einer auf den Clients 3a-3c laufenden Software-Applikation über Drag & Drop möglich ist. Beim Gesprächspartner werden alle empfangenen Dateien oder Informationen z.B. in einem Browserfenster dargestellt und können somit leicht mit der entsprechenden Software-Applikation geöffnet werden.

Figur 5 zeigt das Übersenden von Dateien bzw. Logging-Daten 10 in einem CTI-Kommunikationssystem in 3^{rd}-party-Konfiguration. Hierbei wird angenommen, dass zwischen den Telefonen 2a,2b eine Verbindung - durch die Strich-Punkt-Linie veranschaulicht - besteht und die Verbindungsdaten in einem Call 5 registriert sind, der im Server 4 zwischengespeichert ist. Außerdem wird angenommen, dass der Client 3a dem Telefon 2a und der Client 3b dem Telefon 2b zugeordnet ist.

Zur Übermittlung von Dateien 10 vom Client 3a an den Client 3b wählt der Teilnehmer des Telephons 2a zunächst die zu übermittelnden Dateien 10 aus und sendet diese mittels einer speziellen - nicht dargestellten - Software-Applikation an den Server 4. Die Übermittlung erfolgt dabei über die CTI-Schnittstelle 7. Die Dateien 10 werden schließlich in den Call 5 eingefügt. Da der Call 5 auch dem Client 3b zugeordnet ist, können die übermittelten Dateien 10 auch vom Gesprächspartner am Client 3b abgerufen werden.

Der Call 5 kann auch dazu verwendet werden, die Verbindungsdaten für alle Endgeräte 2a-2c, die diesem Call während seiner Lebensdauer zugeordnet waren, zu protokollieren. Hierzu trägt jeder Client 3a-3c bzw. die darauf laufende CTI-Software-Applikation, wenn ihr ein Call 5 zugeordnet wird, die Verbindungsdaten des zugeordneten Endgerätes 2a-2c in den dafür vorgesehenen Speicherbereich des Calls 5 ein. Dies kann bereits bei einem Anruf, den das Endgerät 2a-2c erhält, oder während eines Gesprächeserfolgen. Diese Informationen 10 können von jedem Client 3a-3c abgerufen werden, dessen zugeordnetes Endgerät 2a-2c aktuell an der Verbindung beteiligt ist.

Zur Veranschaulichung des Verfahrens soll folgendes Beispiel dienen:

| Anrufer: | 02302 815 1734 Mueller KG | | | | |
|---|---|---|---|---|---|
| Datum | Uhrzeit | Dauer | Name | Rufnummer | Ruf/Verbunden |
| 21.01.00 | 8:00:00 | 00:00:30 | Hr. Meier | 100 | Ruf, Weiterl. |
| 21.01.00 | 8:00:30 | 00:00:10 | Hr. Schulz | 120 | Ruf |
| 21.01.00 | 8:00:40 | 00:02:00 | Hr. Schulz | 120 | Gespräch, Verb. |
| 21.01.00 | 8:02:40 | 00:00:20 | Hr. Hell | 130 | Ruf |
| ... | | | | | |
| ... | | | | | |

Zeile 1 der Tabelle gibt an, dass ein Herr Meier am 21.01.00 um 8 Uhr angerufen wurde und, da er nicht am Platz war, nach 30 Sekunden eine Weiterleitung zu Herrn Schulz erfolgt ist.

Diese Informationen werden z.B. am Ende des Anrufes vom zugehörigen Client 3a in den zugehörigen Call 5 eingetragen.

In Zeile 2 ist zu erkennen, dass Herr Schulz mit der Rufnummer 120 nach 10 Sekunden den Hörer abnimmt und ein Gespräche beginnt. Dies wird vom zugehörigen Client 3b wiederum in den Call eingetragen.

In Zeile 3 ist angegeben, dass Herr Schulz das Gespräch nach 2 Minuten an Herrn Hell weiterverbindet. Auch dies wird entsprechend vom Client 3b in den zugehörigen Call 5 eingetragen.

Wie zu erkennen ist, läutet das Telefon (Ruf) nun bei Herrn Hell mit der Rufnummer 130, der nach 20 Sekunden noch nicht abgenommen hat.

Wenn Herr Schreiber nun den Hörer abnimmt, erkennt er am Bildschirm seines Clients 3c, welche Teilnehmer 2a-2c vor ihm bereits an diesem Telefonat beteiligt waren.

Dadurch kann vermieden werden, dass ein Anrufer mehrfach im Kreis weitergeleitet wird. Außerdem kann sich der Angerufene darauf einstellen, welche Stationen der Anrufer bereits durchlaufen hat.

## Patentansprüche

1. Verfahren zur Übermittlung von Daten in einem Kommunikationssystem, umfassend
- mehrere Endgeräte (2a-2c), wobei im Fall einer Verbindung zwischen zwei oder mehr Endgeräten (2a-2c) einen Call (5) generiert wird, der vorgegebene Informationen über die Verbindung enthält,
- einen Server (4) und mehrere mit dem Server (4) verbundene Clients (3a-3c), die über eine Schnittstelle (7) mit dem Server (4) kommunizieren,
**gekennzeichnet durch** folgende Schritte:
- Übertragen einer Datei oder von Logging-Daten (10) von einem der Clients (3a-3c) über die Schnittstelle (7) zum Server (4);
- Speichern der Datei oder der Logging-Daten (10) in einem vorgegebenen Speicherbereich des zugeordneten Calls (5), und
- Weiterleiten der Daten (10) zu wenigstens einem anderen der Clients (3a-3c).

2. Verfahren nach Anspruch 1,
**dadurch gekennzeichnet,**
**dass** die Schnittstelle (7) eine CTI-Schnittstelle ist.

3. Verfahren nach Anspruch 2,
**dadurch gekennzeichnet,**
**dass** auf den Clients (3a-3c) eine Software-Applikation eingerichtet ist, die das Senden und Auslesen von Dateien über die CTI-Schnittstelle (7) ermöglicht.

4. Verfahren nach Anspruch 3,
**dadurch gekennzeichnet,**
**dass** das Einfügen von Dateien in die Software-Applikation per Drag & Drop erfolgt.

5. Verfahren nach Anspruch 1,
**dadurch gekennzeichnet,**
**dass** die von einem der Clients (3a-3c) empfangenen Dateien in einem Browserfenster dargestellt werden.

6. Verfahren nach Anspruch 1,
**dadurch gekennzeichnet,**
**dass** der Speicherbereich von allen, dem Call (5) zugeordneten Clients (3a-3c) beschrieben und ausgelesen werden kann.

7. Verfahren nach einem der vorhergehenden Ansprüche,
**dadurch gekennzeichnet,**
**dass** vorgegebene Daten sämtlicher während der Lebensdauer eines Calls (5) zustande gekommener Verbindungen protokolliert werden, wodurch eine Art Verbindungshistorie entseht.

8. Verfahren nach Anspruch 7,
**dadurch gekennzeichnet,**
**dass** die Verbindungshistorie Informationen über diejenigen Endgeräte (2a-2c) aufweist, die den Call (5) während seiner Lebensdauer zugeordnet waren.

9. Verfahren nach Anspruch 7 oder 8,
**dadurch gekennzeichnet,**
**dass** ein Client (3a-3c), dem ein Call (5) zugeordnet wurde, vorgegebene Informationen in die Verbindungshistorie schreibt.

10. Verfahren nach einem der Ansprüche 7 bis 9,
**dadurch gekennzeichnet,**
**dass** die Verbindungshistorie wenigstens die Namen von Nutzern der Endgeräte (2a-2c) enthält.

11. Verfahren nach einem der vorhergehenden Ansprüche,
**dadurch gekennzeichnet,**
**dass** das Kommunikationssystem als CTI-Kommunikationssystem in 3^{rd}-party-Konfiguration betrieben wird.
